# EUROPEAN PATENT SPECIFICATION

(11) **EP 3 922 593 B1**
(45) Date of publication and mention of the grant of the patent: **26.06.2024**
(21) Application number: 19914674.7
(22) Date of filing: 07.02.2019
(51) Int. Cl.: B66F 9/12, B66F 9/18

(54) **LIFTER**
HEBER
DISPOSITIF DE LEVAGE

(43) Date of publication of application: 15.12.2021
(73) Proprietor: Mitsubishi Electric Corporation, Tokyo 100-8310 (JP)
(72) Inventor: TAKARADA, Mai, Tokyo 100-8310 (JP); SEKI, Koichiro, Tokyo 100-8310 (JP); YUKI, Hiroto, Tokyo 100-8310 (JP)
(74) Representative: Witte, Weller & Partner Patentanwälte mbB
(86) International application number: PCT/JP2019/004428
(87) International publication number: WO 2020/161859

(56) References cited:
- JP-A- 2004 182 437
- JP-A- 2005 112 612
- JP-A- 2005 157 838
- JP-A- 2009 107 759
- JP-A- 2012 016 229
- JP-A- 2012 201 436
- JP-A- 2015 122 929
- JP-A- 2018 080 028
- JP-U- H01 137 998
- JP-U- S60 170 398
- KR-A- 20130 138 437
- KR-A- 20170 049 034

## Description

### TECHNICAL FIELD

The present disclosure relates to a lifter.

### BACKGROUND ART

A switchboard used in power receiving/distributing equipment includes a so-called switchgear or control gear having a switch apparatus stored in a metal housing. Multiple motors are used for driving a pump, machinery, or the like in a plant such as a factory, a water/sewerage system, or a power plant. In order to make centralized management of control, protection, measurement, and monitoring for the motors at one location, control devices are unitized and a plurality of these units are stored in the vertical direction in a control center (a kind of control gear), which is widely used in plants.

Each unit stored in a unit chamber of the control center is formed by storing an electric device in a metal housing. The weight of the unit increases depending on the types and the number of electric devices. Therefore, it might be difficult for a worker to lift and store the unit in the unit chamber. Accordingly, at the time of inserting/drawing the unit into/from the unit chamber, a lifter is used for assisting the work. The lifter is an elevating machine having an ascendable/descendable table. To insert the unit into the unit chamber using the lifter, first, the unit is placed on the table of the lifter, and the table is ascended to lift the unit approximately to the height of the unit chamber. Then, the worker inserts the unit into the unit chamber by hands. To draw the unit from the unit chamber, a procedure reverse to the case of insertion is performed. However, since the work of inserting/drawing the unit into/from the unit chamber is performed using worker's hands, there is a problem that the unit might drop from the worker's hands or the lifter in the case where the work is performed in an unstable situation at a high place or the unit has a heavy weight.

In order to solve such a problem, disclosed is a method of attaching a simple member for assisting insertion and drawing of the unit, to the switchboard side (see, for example, Patent Document 1).

Patent Document 2 relates to a lifter for a circuit breaker of a distributing board. The lifter for a circuit breaker of a distribution board comprises: a base; a pair of vertical frames installed on the base; a basket including a lower body and a pair of side bodies located on both sides of the lower body; a lifting mechanism for lifting and lowering the basket along the vertical frames; a first rail mounted to the basket to be positioned between the side bodies; and a second rail mounted on the basket to be placed apart from the first rail and guiding the breaker together with the first rail when the breaker is seated in the basket. The basket has a plurality of rail fastening portions for selectively fastening the basket to at least one of the first rail and the second rail, wherein the rail fastening portions are positioned in a direction where the pair of side bodies are separated from each other. Patent document 2 discloses the preamble of claim 1.

### CITATION LIST

### PATENT DOCUMENT

Patent Document 1: Japanese Laid-Open Patent Publication No. 2010-220422
Patent Document 2: KR 2017 0049034 A

### SUMMARY OF THE INVENTION

### PROBLEMS TO BE SOLVED BY THE INVENTION

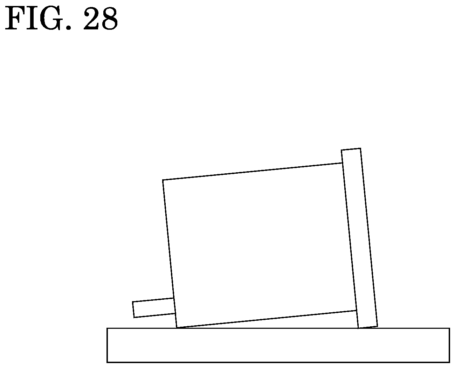

In Patent Document 1, work of inserting/drawing the unit into/from the unit chamber is performed with the help of the member attached on the control center side, whereby the unit can be prevented from dropping during the work. However, in a case where the unit has a front panel fixed at the front side thereof and having a larger size than the front surface of the metal housing of the unit, as shown in FIG. 28, the lower end of the front panel protrudes downward relative to the bottom surface of the metal housing, and thus the unit cannot be placed horizontally on the table of the lifter. Therefore, if the unit is inserted into the unit chamber while the unit placed obliquely is kept in the oblique state, a main circuit contactor protruding from the back surface of the unit contacts with a shelf plate on which the unit is placed in the control center, thus causing a problem of damaging the shelf plate or the unit.

The present disclosure has been made to solve the above problem, and an object of the present disclosure is to provide a highly convenient lifter that enables a unit to be kept horizontal on a table of the lifter.

### SOLUTION TO THE PROBLEMS

Therefore, there is provided a lifter according to independent claim 1.

### EFFECT OF THE INVENTION

The lifter according to the present disclosure enables a unit to be kept horizontal on a table of the lifter.

### BRIEF DESCRIPTION OF THE DRAWINGS

[FIG. 1] FIG. 1 is a side view showing the schematic structure of a lifter according to embodiment 1.
[FIG. 2] FIG. 2 is a perspective view showing the schematic structure of the lifter according to embodiment 1.
[FIG. 3] FIG. 3 is a back surface showing the schematic structure of the lifter according to embodiment 1.
[FIG. 4] FIG. 4 is a front view of a control center.
[FIG. 5] FIG. 5 is a perspective view of a unit.
[FIG. 6] FIG. 6 is a perspective view showing the schematic structure of a table of the lifter according to embodiment 1.
[FIG. 7] FIG. 7 is a side view schematically showing the table of the lifter according to embodiment 1, the unit, and a part of the control center.
[FIG. 8] FIG. 8 is a perspective view of a protrusion of the lifter according to embodiment 1.
[FIG. 9] FIG. 9 is a top view of the protrusion of the lifter according to embodiment 1.
[FIG. 10] FIG. 10 is a side view of the protrusion of the lifter according to embodiment 1.
[FIG. 11] FIG. 11 is a top view schematically showing insertion of the unit using the lifter according to embodiment 1.
[FIG. 12] FIG. 12 is a side view showing the schematic structures of the lifter according to embodiment 1, the unit, and the control center.
[FIG. 13] FIG. 13 is a perspective view showing the schematic structure of another table of the lifter according to embodiment 1.
[FIG. 14] FIG. 14 is a sectional view showing a part of the unit and a part of the table shown in FIG. 13.
[FIG. 15] FIG. 15 is a perspective view showing the schematic structure of a table of a lifter according to embodiment 2.
[FIG. 16] FIG. 16 is a perspective view of a protrusion of the lifter according to embodiment 2.
[FIG. 17] FIG. 17 is a top view of the protrusion of the lifter according to embodiment 2.
[FIG. 18] FIG. 18 is a side view of the protrusion of the lifter according to embodiment 2.
[FIG. 19] FIG. 19 is a front view schematically showing the table being ascended when the unit is drawn using the lifter according to embodiment 2.
[FIG. 20] FIG. 20 is a side view of the control center in a state in which the unit to be drawn is retained at a test position.
[FIG. 21] FIG. 21 is an exploded perspective view showing the schematic structure of the table of a lifter according to embodiment 3.
[FIG. 22] FIG. 22 is a top view showing the schematic structure of a table of the lifter according to embodiment 3.
[FIG. 23] FIG. 23 is a sectional view along a dotted-dashed line A-A in FIG. 22.
[FIG. 24] FIG. 24 is an exploded perspective view showing the schematic structure of another table of the lifter according to embodiment 3.
[FIG. 25] FIG. 25 is an exploded perspective view showing the schematic structure of a table of a lifter according to embodiment 4.
[FIG. 26] FIG. 26 is a top view showing the schematic structure of the table of the lifter according to embodiment 4.
[FIG. 27] FIG. 27 is an exploded perspective view showing the schematic structure of another table of the lifter according to embodiment 4.
[FIG. 28] FIG. 28 is a side view showing a unit placed on a table of a conventional lifter.

### DESCRIPTION OF EMBODIMENTS

Hereinafter, a lifter according to embodiments of the present disclosure will be described with reference to the drawings. In the drawings, the same or corresponding members or parts are denoted by the same reference characters, to give description.

### Embodiment 1

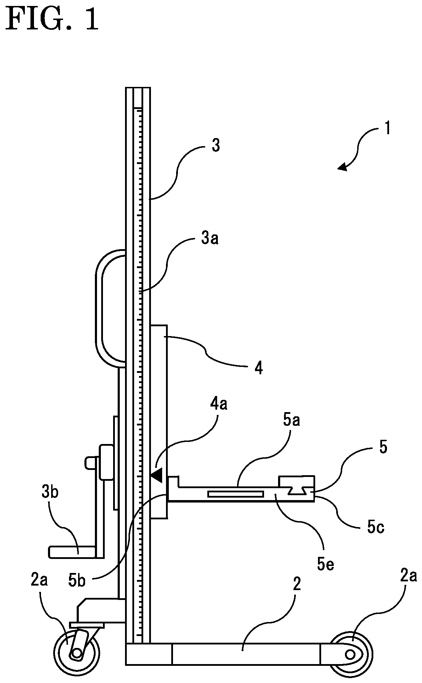

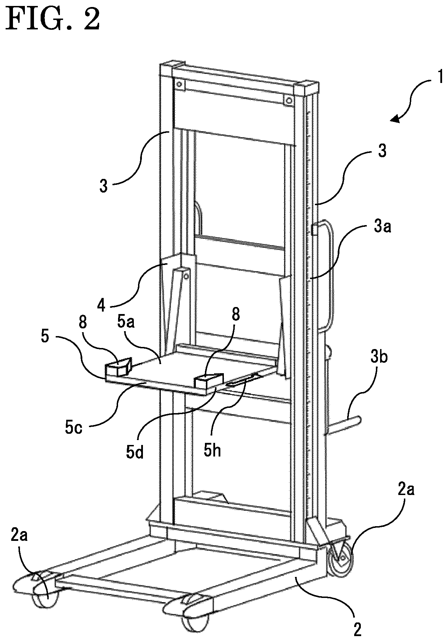

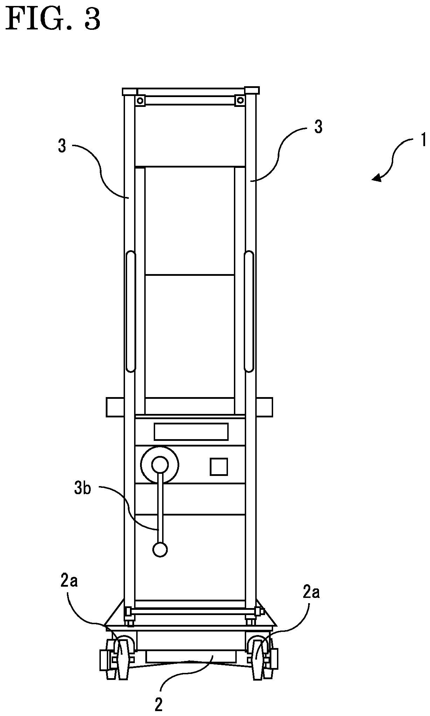

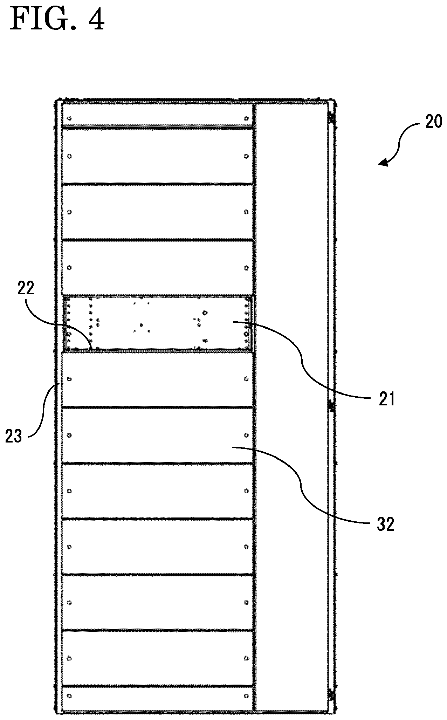

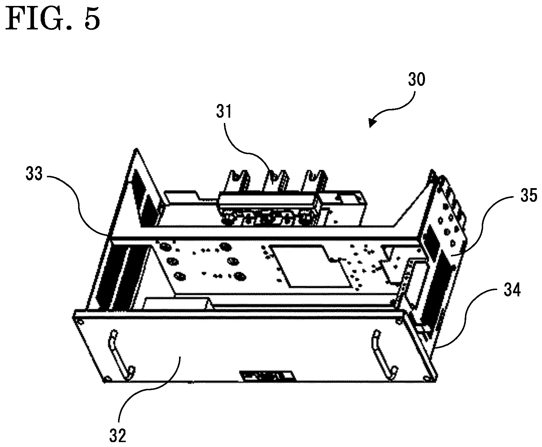

FIG. 1 is a side view showing the schematic structure of a lifter according to embodiment 1, FIG. 2 is a perspective view thereof, FIG. 3 is a back view thereof, FIG. 4 is a front view of a control center, and FIG. 5 is a perspective view of a unit. The lifter 1 includes a horizontal wheeled base 2 having wheels 2a, a support portion 3 extending vertically from the wheeled base 2, and a rectangular table 5 provided vertically and ascendably/descendably with respect to the support portion 3, and having a plate shape of which the upper surface is a placement surface 5a for placing an object to be placed, a side surface on the support portion 3 side is a front side surface 5b, a side surface opposed to the front side surface 5b is a rear side surface 5c, and side surfaces connecting the front side surface 5b and the rear side surface 5c are a left side surface 5d and a right side surface 5e. The table 5 is connected to an ascending/descending operation portion 3b provided on the back surface side of the lifter 1 via a table ascending/descending portion 4, and ascends/descends along the support portion 3. The lifter 1 is used in a work of inserting/drawing a unit 30 shown in FIG. 5 to/from a shelf plate 22 of a unit chamber 21 of a control center 20 shown in FIG. 4. The control center 20 has a plurality of unit chambers 21 which are electric apparatus chambers and layered in the vertical direction. The unit 30 having an electric apparatus stored therein is stored in each unit chamber 21. FIG. 4 shows a state in which the unit 30 is not inserted only at the fourth stage from the top among the unit chambers 21 at ten stages. A main circuit contactor 31 provided so as to protrude on the back surface of the unit 30 is connected to a conductor (not shown) inside the control center 20. A front panel 32 having a larger size than the front surface of a metal housing 33 of the unit 30 is fixed on the front side of the unit 30. The front panel 32 and a housing 23 of the control center 20 are fixed by, for example, screwing. The unit 30 can be lifted/lowered to a desired height using the lifter 1, whereby the worker's load of lifting the unit 30 is reduced.

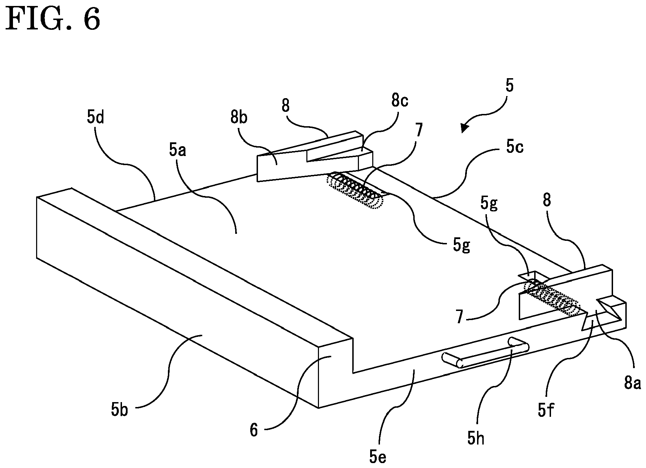

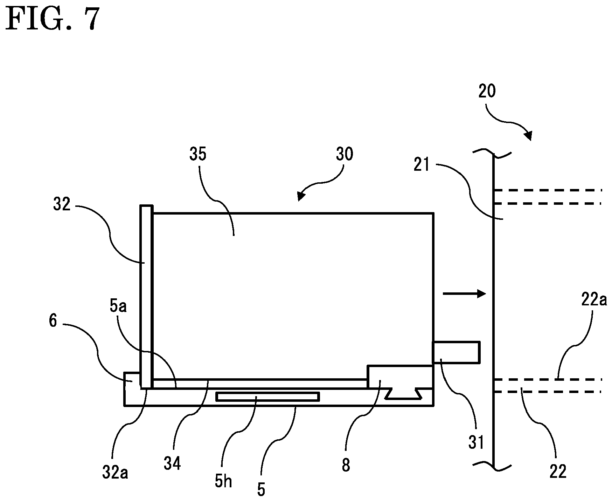

The table 5 which is a major part of the present disclosure will be described. FIG. 6 is a perspective view showing the schematic structure of the table 5 of the lifter according to embodiment 1, and FIG. 7 is a side view schematically showing the table 5 of the lifter, the unit 30, and a part of the control center 20. The table 5 is fixed to the table ascending/descending portion 4 shown in FIG. 1, by, for example, screwing. The unit 30 which is an object to be placed is placed on the placement surface 5a. A guide 6 having a shape protruding from the placement surface 5a is formed along the front side surface 5b. The guide 6 is for determining the placement position of the front panel 32 on the front side of the unit 30, and as shown in FIG. 7, by providing the guide 6, the placement position of the unit 30 on the table 5 is determined. Two protrusions 8 are provided on the placement surface 5a so as to be opposed to each other in parallel to the direction in which the left side surface 5d and the right side surface 5e extend. In the placement surface 5a, a groove 5f is formed with its interval expanding in the plate thickness direction from the top surface of the placement surface 5a. The groove 5f and a fitting portion 8a of the protrusion 8 are fitted to each other. The protrusions 8 have step portions 8c in a stepped shape, on their side surfaces opposed to each other. As shown in FIG. 7, each protrusion 8 supports a bottom surface 34 and a side surface 35 of the unit 30 by the step portion 8c, and by providing the protrusions 8, the unit 30 is supported horizontally on the placement surface 5a of the table 5 even if the unit 30 is formed such that a lower end 32a of the front panel 32 protrudes downward relative to the bottom surface 34. The direction in which the unit 30 is slid is a direction from the guide 6 to the protrusions 8 (arrow direction in FIG. 7). The unit 30 slides to the control center 20 while being kept in a horizontal state, so as to be inserted onto an upper surface 22a of the shelf plate 22 of the unit chamber 21. Since the unit 30 is inserted horizontally, the main circuit contactor 31 does not contact with the shelf plate 22 and insertion of the unit 30 is not hampered. Handles 5h are provided at a left side surface 5d and a right side surface 5e of the table 5, and are used for supporting the table 5 when the unit 30 is slid.

As shown in FIG. 6, each protrusion 8 is provided on the rear side surface 5c side with respect to the center of the placement surface 5a, so as to be movable in parallel to the direction in which the rear side surface 5c extends. Each fitting portion 8a is connected to the table 5 via a spring 7 which is an elastic body and pulls in the inward direction of the table 5 which is the movable direction of each protrusion 8. The spring 7 is stored in a second groove 5g provided in the placement surface 5a so as to be connected to the groove 5f. The fitting portions 8a are fitted into the grooves 5f toward the inner side of the table 5 from the left side surface 5d and the right side surface 5e of the table 5, and thus the protrusions 8 do not move in the direction in which the unit 30 is slid. When the unit 30 is inserted into the unit chamber 21, the front panel 32 passes while pushing and expanding the protrusions 8, and when the front panel 32 passes, the unit 30 is already supported by the shelf plate 22 and therefore does not drop from the table 5. After the unit 30 is stored, the protrusions 8 return to the original provided positions by the pulling actions of the springs 7. At the time of sliding the unit 30, the worker need not lift the unit 30 to avoid the protrusions 8, or need not manually attach/detach the protrusions 8. In addition, the unit 30 is supported by being pressed between the protrusions 8 with the forces of the springs 7, so that the support of the unit 30 on the table 5 is stabilized. Since the protrusions 8 are mounted by fitting between the grooves 5f and the fitting portions 8a, it is possible to easily replace each protrusion 8 when the protrusion 8 is damaged, or in accordance with the weight of the unit to be placed, etc.

The placement surface 5a is formed by a low-friction surface or a low-friction structure. For example, in a case where the table 5 is made of iron, a low-friction surface can be formed by applying chrome plating to the placement surface 5a of the table 5. In a case where the table 5 is made of polyacetal, a low-friction surface can be formed by forming the placement surface 5a by polyacetal. Alternatively, the placement surface 5a may have a corrugated shape formed in a direction perpendicular to the guide 6, thereby making a low-friction structure. The placement surface 5a having a low friction inhibits damage during sliding of the lower end 32a of the front panel 32 contacting with the placement surface 5a. In addition, the unit 30 can be easily slid on the placement surface 5a.

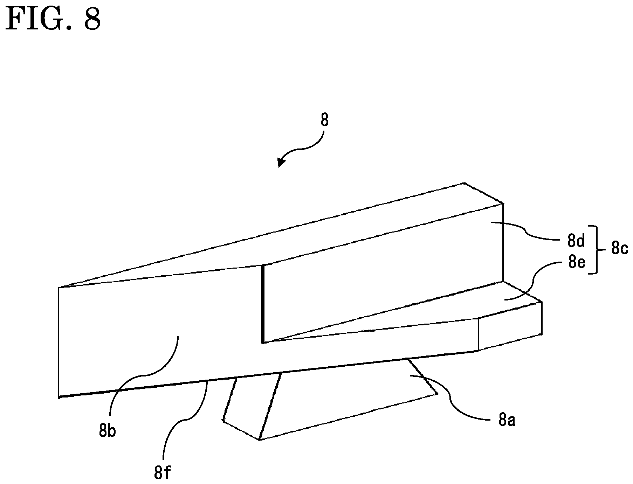

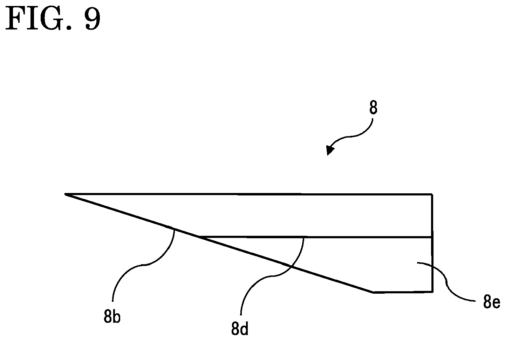

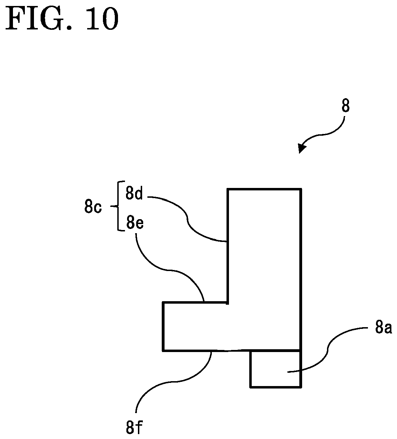

FIG. 8 is a perspective view of the protrusion 8 of the lifter according to embodiment 1, FIG. 9 is a top view of the protrusion 8, and FIG. 10 is a side view of the protrusion 8. The protrusion 8 has a shape obtained by cutting a part of a quadrangular prism having a trapezoidal bottom surface 8f, from the upper side, along the vertical direction, to form the step portion 8c, and is made of polyacetal, for example. A vertical surface 8d formed by the cutting supports the side surface 35 of the unit 30 shown in FIG. 7. A trapezoidal surface 8e formed by the cutting supports the bottom surface 34 of the unit 30. Since the unit 30 is supported at both of the side surface 35 and the bottom surface 34 by each protrusion 8, the support of the unit 30 on the table 5 is stabilized. The fitting portion 8a is provided to the bottom surface 8f of the protrusion 8.

The side surfaces of the protrusions 8 opposed to each other have first slope surfaces 8b formed such that both opposed side surfaces are sloped toward the outer sides of the placement surface 5a, from the rear side surface 5c side to the front side surface 5b side. Since the first slope surfaces 8b are provided, when the unit 30 is inserted into the unit chamber 21, the protrusions 8 are pushed and expanded along with the sliding of the unit 30 after the front panel 32 contacts with the first slope surfaces 8b.

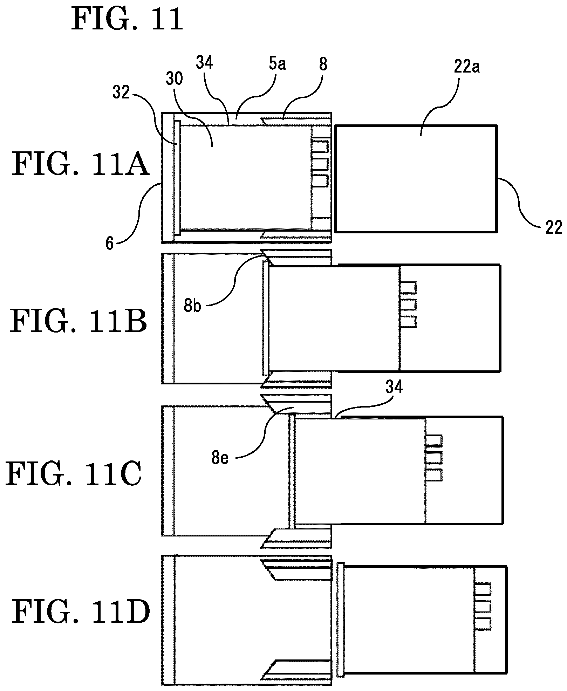

Insertion operation of the unit 30 into the unit chamber will be described. FIG. 11A to FIG. 11D are top views schematically showing insertion of the unit 30 using the lifter according to embodiment 1. First, the table 5 on which the unit 30 is placed is ascended to the height of the shelf plate 22 so that the bottom surface 34 of the unit 30 is aligned with the upper surface 22a of the shelf plate 22 (FIG. 11A). Next, the front panel 32 contacting with the placement surface 5a is slid so as to slide the unit 30 toward the shelf plate 22 so that the unit 30 is supported by the shelf plate 22. When the front panel 32 contacts with the first slope surfaces 8b during sliding, the protrusions 8 are pushed and expanded without hampering the sliding of the unit 30 (FIG. 11B). When the front panel 32 has passed over the first slope surfaces 8b, the front panel 32 is held between the protrusions 8 (FIG. 11C). At this time, the bottom surface 34 of the unit 30 is not supported by the trapezoidal surfaces 8e. However, the bottom surface 34 of the unit 30 is supported by the upper surface 22a of the shelf plate 22, so that the unit 30 is not tilted or does not drop. After the unit 30 has passed over the protrusions 8, the protrusions 8 return to the original provided positions (FIG. 11D). As described above, the worker only performs a work of sliding the unit 30 and need not operate the protrusions 8. In addition, since the unit 30 is not lifted up, worker's hands are not pressed between the unit 30 and the table 5. In addition, since the protrusions 8 contact with the back side of the front panel 32, the front side of the front panel 32 is not damaged.

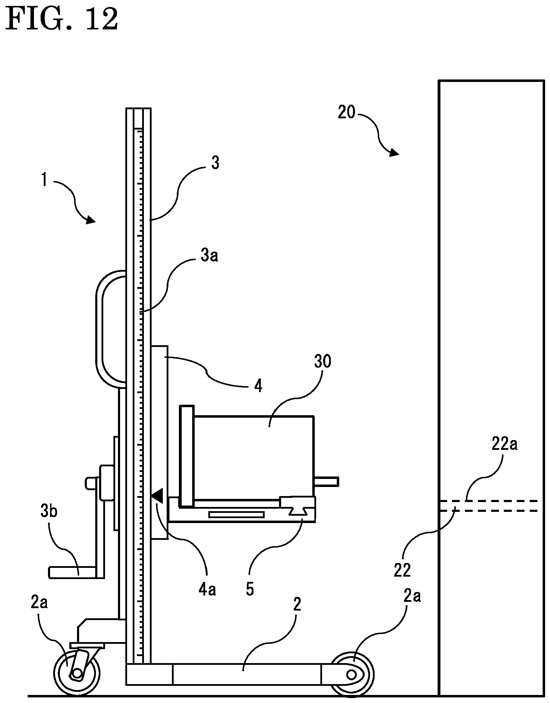

As shown in FIG. 12, the support portion 3 is provided with a scale 3a, and the table ascending/descending portion 4 is provided with a mark 4a to point the scale 3a. The scale 3a is formed in a range where the heights of the shelf plate 22 of the control center 20 and the table 5 of the lifter 1 are aligned with each other. By matching the scale 3a and the mark 4a with each other, the worker can easily perform operation of lifting the unit 30 to the height for inserting the unit 30 onto the shelf plate 22.

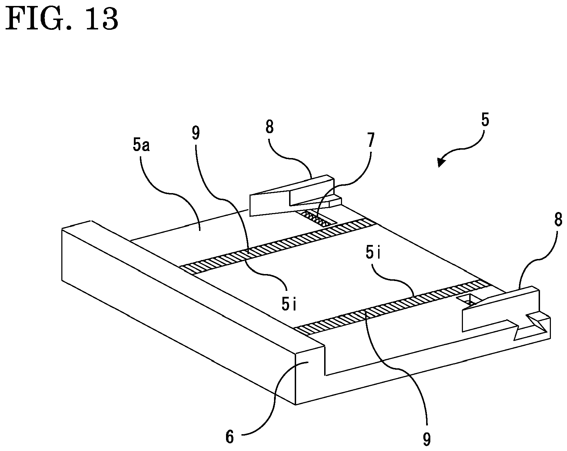

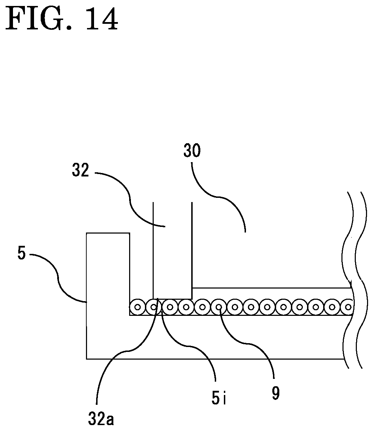

In the above description, the placement surface 5a is formed by a low-friction surface or a corrugated low-friction structure. However, without limitation thereto, a plurality of rollers 9 which are rotatable columns may be arranged at a part of the placement surface 5a, to form a low-friction structure. FIG. 13 is a perspective view showing the schematic structure of another table 5 of the lifter according to embodiment 1, and FIG. 14 is a sectional view showing a part of the unit 30 and a part of the table 5 shown in FIG. 13. The rollers 9 are arranged in a paved form in two third grooves 5i provided in the placement surface 5a of the table 5. As shown in FIG. 14, the lower end 32a of the front panel 32 of the unit 30 contacts with the rollers 9. When the unit 30 slides, the rollers 9 rotate, so that the unit 30 can easily slide. In addition, occurrence of damage to the front panel 32 and deformation of the front panel 32 due to sliding can be inhibited.

In the above description, each fitting portion 8a of the protrusions 8 is connected to the table 5 via the spring 7 pulling in the inward direction of the table 5. However, without limitation thereto, each fitting portion 8a may be connected to the table 5 via rubber as an elastic body.

As described above, the lifter 1 according to embodiment 1 is provided with two protrusions 8 for supporting the bottom surface of a unit placed on the table 5. Therefore, the unit can be kept horizontal on the table 5 of the lifter 1. In addition, since the unit is kept horizontal on the table 5, a work of inserting/drawing the unit into/from the control center is not hampered by a main circuit contactor protruding from the back surface of the unit, and thus the insertion/drawing work can be smoothly performed. In addition, the two protrusions 8 are provided on the rear side surface 5c side with respect to the center of the placement surface 5a so as to be opposed to each other and movable in parallel to the direction in which the rear side surface 5c extends. Thus, the unit is stably supported and sliding of the unit is not hampered, so that work convenience can be improved. In addition, the protrusions 8 are provided so as to be fitted to the grooves 5f of the table 5, and thus are not moved in the direction in which the unit is slid. Therefore, the protrusions 8 can stably support the unit also during the sliding. In addition, since the protrusions 8 have the vertical surfaces 8d for supporting the side surfaces of the unit, the protrusions 8 can stably support the unit. In addition, the protrusions 8 are connected to the table 5 via the springs 7 and thus can return to the original provided positions without worker's manual operation, whereby workability in sliding of the unit can be improved. In addition, since the protrusions 8 are pulled in the inward direction of the table 5 by the springs 7, the protrusion 8 can stably support the unit. In addition, the opposed side surfaces of the two protrusions 8 have the first slope surfaces 8b, so that the protrusions 8 are pushed and expanded without the worker operating the protrusions during sliding of the unit. Thus, workability in sliding of the unit can be improved. In addition, since the placement surface for the unit is formed by a low-friction surface, the unit can be easily slid, whereby work convenience can be improved. In addition, since the support portion 3 is provided with the scale 3a and the table ascending/descending portion 4 is provided with the mark 4a to point the scale 3a, the worker can easily perform operation of lifting the unit to a height for inserting the unit onto the shelf plate.

### Embodiment 2

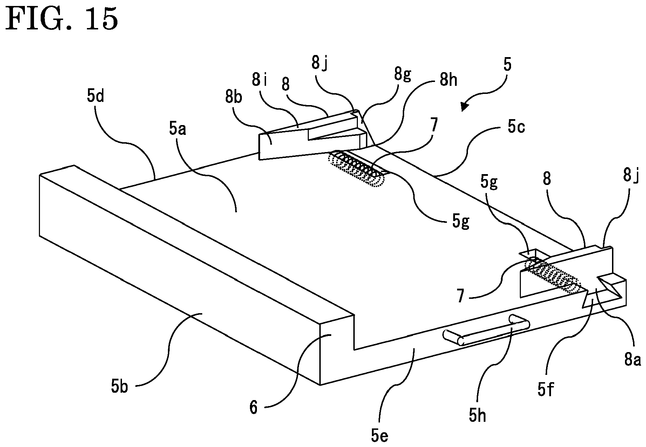

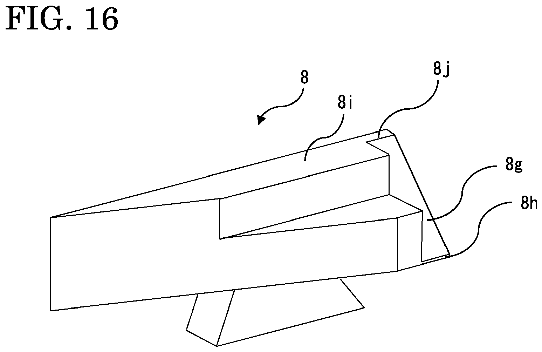

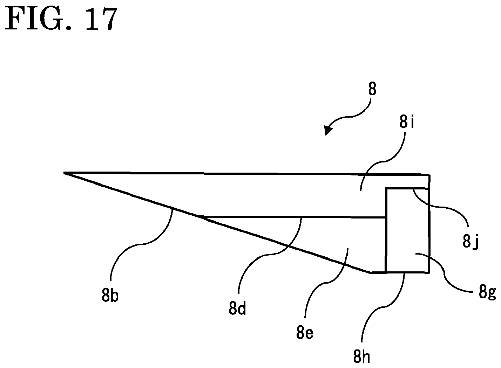

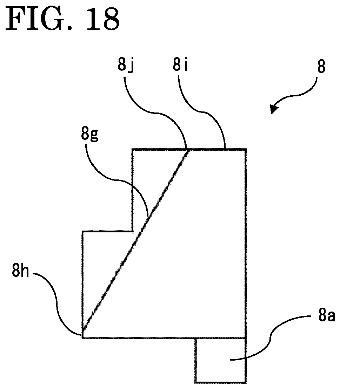

A lifter according to embodiment 2 will be described. FIG. 15 is a perspective view showing the schematic structure of a table of the lifter, FIG. 16 is a perspective view of a protrusion 8 of the lifter, FIG. 17 is a top view of the protrusion 8, and FIG. 18 is a side view of the protrusion 8. The protrusion 8 of the lifter according to embodiment 2 is formed such that a second slope surface 8g and a step 8h are provided in addition to the structure of the protrusion 8 shown in embodiment 1.

The side surfaces of the protrusions 8 opposed to each other have, on the rear side surface 5c side of the table 5, the second slope surfaces 8g formed such that both opposed side surfaces are sloped from upper surfaces 8i of the protrusions 8 toward the inner side of the placement surface 5a of the table 5. The interval between an upper portion 8j of the second slope surface 8g, and an upper portion 8j of the second slope surface 8g of the protrusion 8 opposed thereto, is set to such a size within which the transverse width of the front panel 32 of the unit 30 is included. Since the second slope surfaces 8g are provided, when the lifter 1 ascends the table 5 toward the front panel 32 at the time of drawing the unit 30 from the unit chamber 21, the protrusions 8 are pushed and expanded as the table 5 ascends after the lower end of the front panel 32 contacts with the second slope surfaces 8g.

Between the second slope surface 8g and the placement surface 5a, the step 8h is provided so as to extend vertically from the placement surface 5a. When the table 5 is ascended toward the front panel 32 and thus the front panel 32 and the placement surface 5a have contacted with each other, the front panel 32 is supported by being held between the steps 8h. Therefore, the support of the unit 30 on the table 5 is stabilized and the unit 30 is not pushed back upward along the second slope surfaces 8g. In addition, since the step 8h is provided, the lower end of the second slope surface 8g does not have an acute shape, so that the second slope surface 8g is not easily damaged.

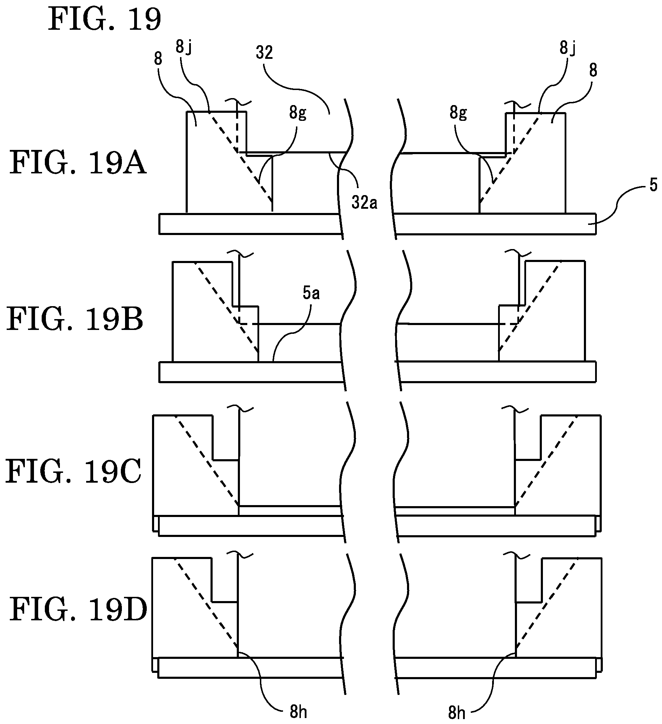

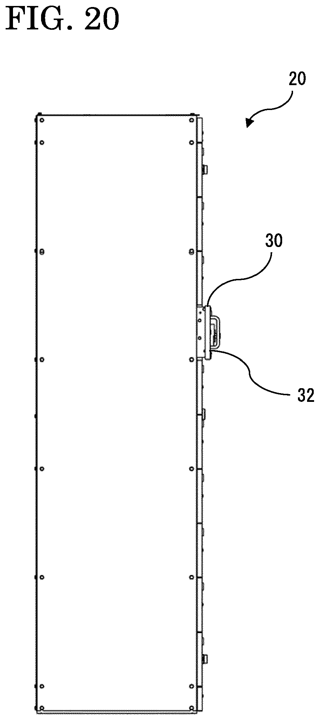

Drawing operation of the unit 30 from the unit chamber will be described. FIG. 19A to FIG. 19D are front views schematically showing the table 5 being ascended when the unit 30 is drawn using the lifter according to embodiment 2. Drawing of the unit 30 is performed in a state in which the unit 30 to be drawn from the control center 20 is drawn to a test position and temporarily retained, as shown in FIG. 20. The test position is a position where the unit 30 is drawn by approximately 30 mm from the control center 20, and a main circuit bus between the unit 30 and the control center 20 is disconnected. First, the lifter 1 is brought close to the control center 20 to such a position that the lower end 32a of the front panel 32 will contact with the second slope surfaces 8g when the table 5 is ascended. Next, the table 5 is ascended. As the table 5 is ascended, the front panel 32 enters between the upper portions 8j (FIG. 19A). When the lower end 32a of the front panel 32 contacts with the second slope surfaces 8g, the protrusions 8 are pushed and expanded without hampering the ascending of the table 5 (FIG. 19B). As the table 5 is further ascended, the protrusions 8 are further pushed and expanded (FIG. 19C). When the lower end 32a and the placement surface 5a contact with each other, the ascending of the table 5 is ended (FIG. 19D). At this time, the front panel 32 is supported by being held between the steps 8h. Next, the front panel 32 is slid in the direction perpendicular to the drawing sheet of FIG. 19, whereby the unit 30 is drawn onto the table 5. When the front panel 32 passes over the first slope surfaces 8b, the protrusions 8 are pulled by the spring 7 so as to enter under the bottom surface 34 of the unit 30. When the center of gravity of the unit 30 moves from the shelf plate 22 of the control center 20 onto the table 5, the unit 30 is supported at the bottom surface 34 by the protrusions 8, and therefore the unit 30 does not drop during the drawing work. As described above, the worker only performs a work of sliding the unit 30 after ascending the table 5, and need not operate the protrusions 8. In addition, since the unit 30 is not lifted up, worker's hands are not pressed between the unit 30 and the table 5. In addition, since the protrusions 8 contact with the lower end 32a of the front panel 32, the front side of the front panel 32 is not damaged. In addition, since the protrusions 8 are pulled by the springs 7, the support of the unit 30 is stabilized.

As described above, in the lifter according to embodiment 2, the protrusions 8 are provided with the second slope surfaces 8g, and during ascending of the table 5, the protrusions 8 are pushed and expanded without the worker operating the protrusions 8. Thus, workability in ascending the table 5 can be improved. In addition, after the table 5 is ascended, the front panel 32 is supported by being held between the steps 8h of the protrusions 8. Thus, the support of the unit 30 is stabilized and the unit 30 is not pushed back upward along the second slope surfaces 8g.

### Embodiment 3

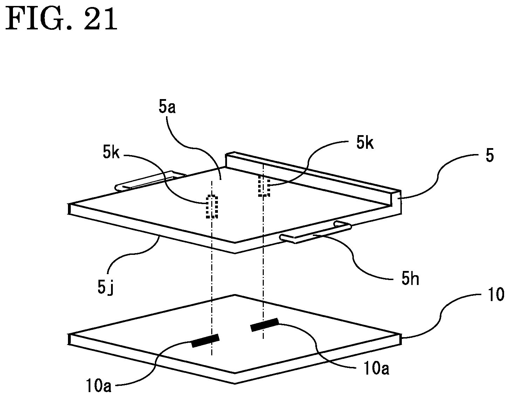

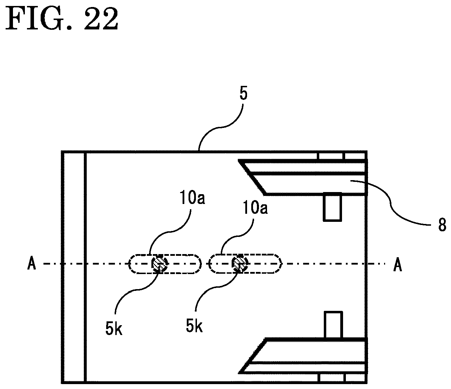

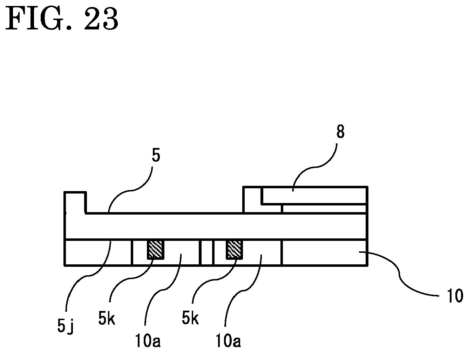

A lifter 1 according to embodiment 3 will be described. FIG. 21 is an exploded perspective view of a table 5 of the lifter 1 according to embodiment 3, FIG. 22 is a top view showing the schematic structure of the table 5, and FIG. 23 is a sectional view along a dotted-dashed line A-A in FIG. 22. The table 5 of the lifter 1 according to embodiment 3 is formed such that a table lower plate 10 is provided in addition to the structure of the table 5 shown in embodiment 1.

The table 5 is provided so as to be overlaid on the table lower plate 10 which ascends/descends together with the table 5, and the table 5 is movable in a horizontal direction with respect to the wheeled base 2. A structure example in which the table 5 is movable in the direction in which the unit 30 is slid will be described. The table lower plate 10 has two elongated holes 10a movably fitted to two shafts 5k provided to a back surface 5j of the table 5. The table lower plate 10 is fixed to the table ascending/descending portion 4 shown in FIG. 1. The two shafts 5k are fixed to the back surface 5j by, for example, screws or fitting. The elongated holes 10a are formed so as to penetrate in the thickness direction of the table lower plate 10. The elongated holes 10a are elongated in the direction in which the unit 30 is slid, and the table 5 and the unit placed on the table 5 are movable, together with the shafts 5k, in the direction in which the unit 30 is slid, within a range in which the elongated holes 10a are elongated. Movement of the table 5 is performed using the handles 5h. Owing to such a movable structure, at the time of inserting the unit into the control center, the table 5 is moved to a position close to the control center and supports the unit, whereby the unit can be prevented from dropping at the time of insertion. At the time of lifting/lowering the unit, even if the main circuit contactor on the back surface of the unit protrudes toward the control center side from the table, the table 5 is moved to a position away from the control center and supports the unit, whereby interference between a protrusion on a board surface of the control center and the main circuit contactor can be easily prevented.

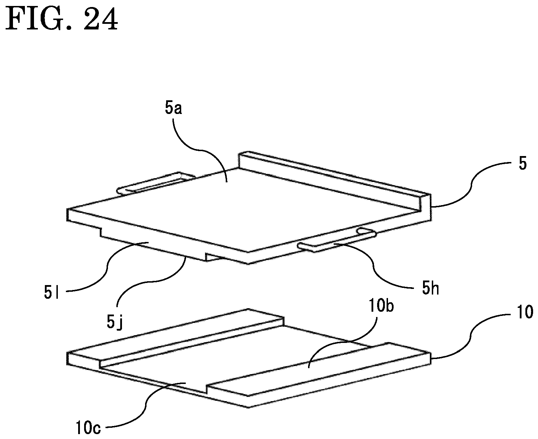

The structure for allowing movement of the table 5 is not limited to the structure shown in FIG. 21 to FIG. 23. As shown in FIG. 24, a projection 5l provided on the back surface 5j of the table 5 and a recess 10c provided on a top surface 10b of the table lower plate 10 may be fitted to each other so as to allow the table 5 to move in the direction in which the unit is slid.

In the above description, the two shafts 5k are provided to the back surface 5j of the table 5, and are fitted to the two elongated holes 10a provided in the table lower plate 10. However, without limitation thereto, two shafts may be provided to the top surface of the table lower plate 10, and fitted to two elongated holes provided in the table 5.

As described above, in the lifter according to embodiment 3, the table 5 is provided so as to be overlaid on the table lower plate 10 and the table 5 is movable in the direction toward the control center. Therefore, when the unit is lifted/lowered, interference between a protrusion on the board surface of the control center and the main circuit contactor can be easily prevented. In addition, during insertion of the unit into the control center, the unit can be prevented from dropping. In addition, since such a structure that the two shafts 5k and the two elongated holes 10a are fitted to each other is employed, it is possible to allow movement of the table 5 while limiting the movement direction, with a simple structure. In addition, if the friction between the unit and the table 5 is made smaller than the friction at the contact area between the table 5 and the table lower plate 10, movement of the table 5 during sliding of the unit is inhibited, whereby it is possible to easily perform only sliding of the unit.

### Embodiment 4

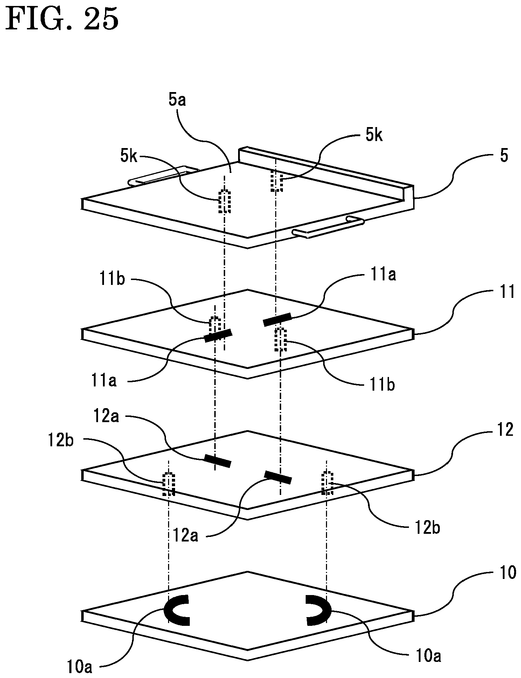

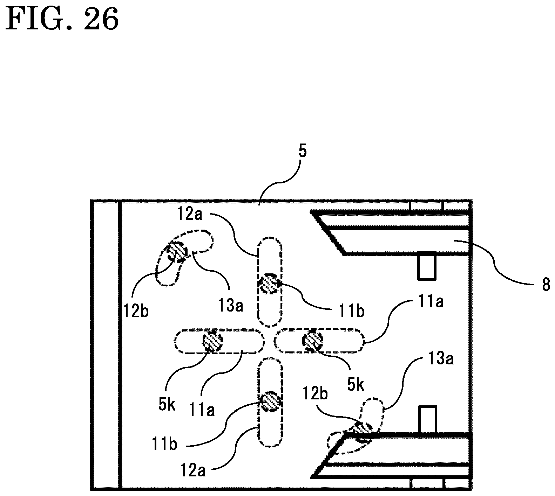

A lifter 1 according to embodiment 4 will be described. FIG. 25 is an exploded perspective view showing the schematic structure of a table according to embodiment 4, and FIG. 26 is a top view showing the schematic structure of the table. In FIG. 25, protrusions and springs are not shown because they have the same structures as in embodiment 1. The table 5 of the lifter 1 according to embodiment 4 is provided so as to be overlaid on a plurality of plates in addition to the structure of the table 5 shown in embodiment 1.

The table 5 is provided so as to be overlaid on three plates, i.e., a table lower plate 10, a first table middle plate 11, and a second table middle plate 12, which ascend/descend together with the table 5. The table 5 is movable in the horizontal direction with respect to the wheeled base 2. A structure example in which the table 5 is movable in three directions including the direction in which the unit 30 is slid will be described. At the plate overlaid surface of the table 5 and the three plates, i.e., the table lower plate 10, the first table middle plate 11, and the second table middle plate 12, which are overlaid on each other in the up-down direction, each lower plate has two elongated holes movably fitted to two shafts provided to the back surface of each upper plate. The first table middle plate 11 has elongated holes 11a movably fitted to two shafts 5k provided to the back surface of the table 5. The elongated holes 11a are elongated in the direction in which the unit is slid, and the table 5 and the unit placed on the table 5 are movable in the direction in which the unit is slid, within a range in which the elongated holes 11a are elongated. Since the table 5 is movable in the direction in which the unit is slid as described above, at the time of inserting the unit into the control center, the table 5 is moved to a position close to the control center and supports the unit, whereby the unit can be prevented from dropping at the time of insertion. At the time of lifting/lowering the unit, even if the main circuit contactor on the back surface of the unit protrudes toward the control center side from the table, the table 5 is moved to a position away from the control center and supports the unit, whereby interference between a protrusion on a board surface of the control center and the main circuit contactor can be easily prevented.

The second table middle plate 12 has elongated holes 12a movably fitted to two shafts 11b provided to the back surface of the first table middle plate 11. The elongated holes 12a are elongated in a direction perpendicular to the direction in which the unit is slid, and the table 5 and the unit placed on the table 5 are movable in the direction perpendicular to the direction in which the unit is slid, within a range in which the elongated holes 12a are elongated. The table lower plate 10 has elongated holes 10a movably fitted to two shafts 12b provided to the back surface of the second table middle plate 12. The elongated holes 10a are elongated in an arc shape, and the table 5 and the unit placed on the table 5 are rotatably movable within a range in which the elongated holes 10a are elongated. Owing to such a structure that the table 5 is movable also in the direction perpendicular to the direction in which the unit is slid, and in the direction of rotating the unit, the adjustment range for the position of the table 5 is expanded. Thus, in a work of inserting/drawing the unit, misalignment between the unit and the unit chamber can be adjusted through movement of only the table 5 without moving the lifter.

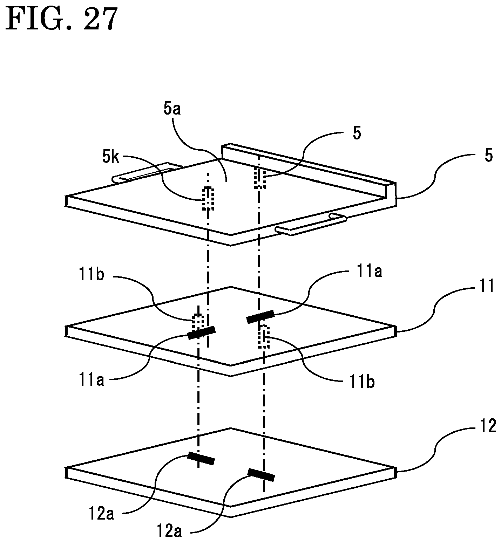

The lengths of the elongated holes, the elongated directions thereof, and the number of overlaid plates are not limited to the above example. As shown in FIG. 27, three plates may be overlaid. Alternatively, the number of overlaid plates may be increased to increase the directions in which the elongated holes are elongated, whereby further fine change can be performed in table position adjustment. In addition, if the friction between the plates provided to the table 5 is made greater than the friction between the placement surface 5a and the unit, each plate does not easily move during sliding of the unit, and thus the insertion/drawing work for the unit is not hampered.

In the above description, at the plate overlaid surface of the table 5 and the plurality of plates overlaid on each other in the up-down direction, each lower plate has two elongated holes movably fitted to two shafts provided to the back surface of each upper plate. However, without limitation thereto, each lower plate may have, on the top surface thereof, two shafts movably fitted to two elongated holes provided in each upper plate.

As described above, in the lifter according to embodiment 3, the table is formed with plates overlaid on each other, and a plate on one side has two elongated holes movably fitted to two shafts provided to a plate on the other side. Thus, it is possible to prevent interference between a projection on the board surface of the control center and the main circuit contactor during ascending/descending, and drop of the unit can be prevented. In addition, in the insertion/drawing work for the unit, misalignment between the unit and the unit chamber can be easily adjusted using only the table.

It is therefore understood that numerous modifications which have not been exemplified can be devised without departing from the scope of the claims.

### DESCRIPTION OF THE REFERENCE CHARACTERS

1 lifter
2 wheeled base
3 support portion
3a scale
3b ascending/descending operation portion
4 table ascending/descending portion
4a mark
5 table
5a placement surface
5b front side surface
5c rear side surface
5d left side surface
5e right side surface
5f groove
5g second groove
5h handle
5i third groove
5j back surface
5k shaft
5l projection
6 guide
7 spring
8 protrusion
8a fitting portion
8b first slope surface
8c step portion
8d vertical surface
8e trapezoidal surface
8f bottom surface
8g second slope surface
8h step
8i upper surface
8j upper portion
9 roller
10 table lower plate
10a elongated hole
10b top surface
10c recess
11 first table middle plate
11a elongated hole
11b shaft
12 second table middle plate
12a elongated hole
12b shaft
20 control center
21 unit chamber
22 shelf plate
22a upper surface
23 housing
30 unit
31 main circuit contactor
32 front panel
32a lower end
33 metal housing
34 bottom surface
35 side surface

## Claims

1. A lifter (1) comprising:
a wheeled base (2);
a support portion (3) extending vertically from the wheeled base (2); and
a rectangular table provided vertically and ascendably/descendably with respect to the support portion (3), and having a plate shape of which an upper surface is a placement surface (5a) for placing an object to be placed, a side surface on the support portion (3) side is a front side surface (5b), a side surface opposed to the front side surface (5b) is a rear side surface (5c), and side surfaces connecting the front side surface (5b) and the rear side surface (5c) are a left side surface (5d) and a right side surface (5e), wherein
the table (5) has, on the placement surface (5a),
a guide (6) provided along the front side surface (5b) and having a shape protruding from the placement surface (5a), and
two protrusions (8) provided so as to be opposed to each other in parallel to a direction in which the left side surface (5d) and the right side surface (5e) extend, **characterized in that**
each protrusion (8) is provided on the rear side surface (5c) side with respect to a center of the placement surface (5a) so as to be movable in parallel to a direction in which the rear side surface (5c) extends.

2. The lifter (1) according to claim 1, wherein
the table (5) has a groove (5f) having an interval expanding in a plate thickness direction from a top surface of the placement surface (5a), and each protrusion (8) has a fitting portion (8a) to be fitted to the groove (5f).

3. The lifter (1) according to claim 2, wherein
each fitting portion (8a) is connected to the table (5) via an elastic body which pulls in an inward direction of the table (5) which is a movable direction of each protrusion (8), and
the protrusions (8) respectively have step portions (8c) in a stepped shape, on side surfaces thereof opposed to each other.

4. The lifter (1) according to claim 3, wherein
the protrusions (8) respectively have, on the side surfaces thereof opposed to each other, first slope surfaces (8b) formed such that both opposed side surfaces are sloped toward outer sides of the placement surface (5a), from the rear side surface (5c) side to the front side surface (5b) side.

5. The lifter (1) according to claim 4, wherein
the side surfaces of the protrusions (8) opposed to each other respectively have, on the rear side surface (5c) side, second slope surfaces (8g) formed such that both opposed side surfaces are sloped from the upper surfaces of the protrusions (8) toward an inner side of the placement surface (5a).

6. The lifter (1) according to claim 5, wherein
a step (8h) is provided between each second slope surface (8g) and the placement surface (5a) so as to extend vertically from the placement surface (5a).

7. The lifter (1) according to any one of claims 1 to 6, wherein
the table (5) is provided so as to be overlaid on a table lower plate (10) which ascends/descends together with the table (5), and the table (5) is movable in a horizontal direction with respect to the wheeled base (2).

8. The lifter (1) according to claim 7, wherein
the table lower plate (10) has two elongated holes (10a) movably fitted to two shafts (5k) provided to a back surface (5j) of the table (5).

9. The lifter (1) according to claim 7, wherein
the table lower plate (10) has, on a top surface (10b) thereof, two shafts movably fitted to two elongated holes provided in the table (5).

10. The lifter (1) according to any one of claims 1 to 6, wherein
the table (5) is provided so as to be overlaid on a plurality of plates which ascend/descend together with the table (5), and the table (5) is movable in a horizontal direction with respect to the wheeled base (2).

11. The lifter (1) according to claim 10, wherein
at a plate overlaid surface of the table (5) and the plurality of plates overlaid on each other in an up-down direction, each lower plate has two elongated holes movably fitted to two shafts provided to a back surface of each upper plate.

12. The lifter (1) according to claim 10, wherein
at a plate overlaid surface of the table (5) and the plurality of plates overlaid on each other in an up-down direction, a top surface of each lower plate has two shafts movably fitted to two elongated holes provided in each upper plate.

13. The lifter (1) according to any one of claims 1 to 12, wherein
the table (5) has handles (5h) at the left side surface (5d) and the right side surface (5e).

14. The lifter (1) according to any one of claims 1 to 13, wherein
the placement surface (5a) is formed by a low-friction surface or a low-friction structure.

15. The lifter (1) according to any one of claims 1 to 14, wherein
the support portion (3) is provided with a scale (3a) and the table (5) is provided with a mark (4a) to point the scale.

## Patentansprüche

1. Hebeeinrichtung (1), die aufweist:
eine Basis (2) mit Rädern;
einen Stützabschnitt (3), der sich vertikal von der Basis (2) mit Rädern erstreckt; und
einen rechtwinkligen Tisch, der vertikal und aufsteigend/absteigend in Bezug auf den Stützabschnitt (3) vorgesehen ist und der eine Plattenform aufweist, deren obere Fläche eine Ablagefläche (5a) zum Ablegen eines abzulegenden Gegenstands ist, wobei eine Seitenfläche auf einer Seite des Stützabschnitts (3) eine vordere Seitenfläche (5b) ist, wobei eine Seitenfläche gegenüberliegend zur vorderen Seitenfläche (5b) eine hintere Seitenfläche (5c) ist und wobei Seitenflächen, die die vordere Seitenfläche (5b) und die hintere Seitenfläche (5c) verbinden, eine linke Seitenfläche (5d) und eine rechte Seitenfläche (5e) sind, wobei
der Tisch (5) auf der Ablagefläche (5a) aufweist
eine Führung (6), die entlang der vorderen Seitenfläche (5b) vorgesehen ist und die eine Form aufweist, die aus der Ablagefläche (5a) vorsteht, und
zwei Vorsprünge (8), die so vorgesehen sind, dass sie einander parallel zu einer Richtung gegenüberliegen, in der sich die linke Seitenfläche (5d) und die rechte Seitenfläche (5e) erstrecken, **dadurch gekennzeichnet, dass**
jeder Vorsprung (8) auf einer Seite der hinteren Seitenfläche (5c) in Bezug auf eine Mitte der Ablagefläche (5a) so vorgesehen ist, dass er parallel zu einer Richtung beweglich ist, in welcher sich die hintere Seitenfläche (5c) erstreckt.

2. Hebeeinrichtung (1) nach Anspruch 1, wobei
der Tisch (5) eine Nut (5f) mit einem Intervall aufweist, das sich in einer Plattendickerichtung von einer oberen Fläche der Ablagefläche (5a) erweitert, und jeder Vorsprung (8) einen Passabschnitt (8a) aufweist, der in die Nut (5f) einzupassen ist.

3. Hebeeinrichtung (1) nach Anspruch 2, wobei
jeder Passabschnitt (8a) mit dem Tisch (5) über einen elastischen Körper verbunden ist, der in einer nach innen gerichteten Richtung des Tischs (5) zieht, die eine bewegliche Richtung von jedem Vorsprung (8) ist, und
die Vorsprünge (8) jeweils Stufenabschnitte (8c) in einer abgestuften Form an ihren Seitenflächen gegenüberliegend zueinander aufweisen.

4. Hebeeinrichtung (1) nach Anspruch 3, wobei
die Vorsprünge (8) jeweils an ihren Seitenflächen gegenüberliegend zueinander erste geneigte Flächen (8b) aufweisen, die so ausgebildet sind, dass beide gegenüberliegenden Seitenflächen in Richtung äußerer Seiten der Ablagefläche (5a) geneigt sind, von der Seite der hinteren Seitenfläche (5c) zu der Seite der vorderen Seitenfläche (5b).

5. Hebeeinrichtung (1) nach Anspruch 4, wobei
die Seitenflächen der Vorsprünge (8), die einander gegenüberliegen, jeweils auf der Seite der hinteren Seitenfläche (5c) zweite geneigte Flächen (8g) aufweisen, die derart ausgebildet sind, dass beide gegenüberliegenden Seitenflächen von den oberen Flächen der Vorsprünge in Richtung einer Innenseite der Ablagefläche (5a) geneigt sind.

6. Hebeeinrichtung (1) nach Anspruch 5, wobei
eine Stufe (8h) zwischen jeder zweiten geneigten Fläche (8g) und der Ablagefläche (5a) so vorgesehen ist, dass sie sich vertikal aus der Ablagefläche (5a) erstreckt.

7. Hebeeinrichtung (1) nach einem der Ansprüche 1 bis 6, wobei
der Tisch (5) so vorgesehen ist, dass er an einer unteren Tischplatte (10) überlagert wird, die zusammen mit dem Tisch (5) aufsteigt/absteigt, und der Tisch (5) in einer horizontalen Richtung in Bezug auf die Basis (2) mit Rädern beweglich ist.

8. Hebeeinrichtung (1) nach Anspruch 7, wobei
die untere Tischplatte (10) zwei Langlöcher (10a) aufweist, die beweglich an zwei Schäfte (5k) angepasst sind, die an einer Rückseite (5j) des Tischs (5) vorgesehen sind.

9. Hebeeinrichtung (1) nach Anspruch 7, wobei
die untere Tischplatte (10) an ihrer oberen Fläche (10b) zwei Schäfte aufweist, die beweglich an zwei Langlöcher angepasst sind, die in dem Tisch (5) vorgesehen sind.

10. Hebeeinrichtung (1) nach einem der Ansprüche 1 bis 6, wobei
der Tisch (5) so vorgesehen ist, dass er auf einer Vielzahl von Platten überlagert wird, die zusammen mit dem Tisch (5) aufsteigen/absteigen, und der Tisch (5) in einer horizontalen Richtung in Bezug auf die Basis (2) mit Rädern beweglich ist.

11. Hebeeinrichtung (1) nach Anspruch 10, wobei
bei einer Platten-überlagerten Fläche des Tischs (5) und der Vielzahl von Platten, die einander in einer Auf-Ab-Richtung überlagert sind, jede untere Platte zwei Langlöcher aufweist, die beweglich an zwei Schäfte angepasst sind, die an einer Rückseite von jeder oberen Platte vorgesehen sind.

12. Hebeeinrichtung (1) nach Anspruch 10, wobei
bei einer Platten-überlagerten Fläche des Tischs (5) und der Vielzahl von Platten, die einander in einer Auf-Ab-Richtung überlagert sind, eine obere Fläche von jeder unteren Platte zwei Schäfte aufweist, die beweglich an zwei Langlöcher angepasst sind, die in jeder oberen Platte vorgesehen sind.

13. Hebeeinrichtung (1) nach einem der Ansprüche 1 bis 12, wobei
der Tisch (5) zwei Griffe (5h) an der linken Seitenfläche (5d) und der rechten Seitenfläche (5e) aufweist.

14. Hebeeinrichtung (1) nach einem der Ansprüche 1 bis 13, wobei
die Ablagefläche (5a) durch eine Fläche mit niedriger Reibung oder durch eine Struktur mit niedriger Reibung gebildet ist.

15. Hebeeinrichtung (1) nach einem der Ansprüche 1 bis 14, wobei
der Stützabschnitt (3) mit einem Maßstab (3a) versehen ist und der Tisch (5) mit einer Markierung (4a) versehen ist, um auf den Maßstab zu zeigen.

## Revendications

1. Dispositif de levage (1), comprenant :
une base à roues (2) ;
une partie de support (3) s'étendant verticalement depuis la base à roues (2) ; et
une table rectangulaire prévue verticalement et de façon éle-vable/abaissable par rapport à la partie de support (3), et ayant une forme de plateau dont une surface supérieure est une surface de positionnement (5a) pour positionner un objet destiné à être positionné, une surface latérale sur le côté partie de support (3) est une surface latérale avant (5b), une surface latérale opposée à la surface latérale avant (5b) est une surface latérale arrière (5c), et des surfaces latérales raccordant la surface latérale avant (5b) et la surface latérale arrière (5c) sont une surface latérale gauche (5d) et une surface latérale droite (5e), dans lequel
la table (5) a, sur la surface de positionnement (5a),
un guide (6) prévu le long de la surface latérale avant (5b) et ayant une forme faisant saillie à partir de la surface de positionnement (5a), et
deux saillies (8) prévues afin d'être opposées l'une à l'autre en parallèle à une direction dans laquelle la surface latérale gauche (5d) et la surface latérale droite (5e) s'étendent, **caractérisé en ce que**
chaque saillie (8) est prévue sur le côté surface latérale arrière (5c) par rapport à un centre de la surface de positionnement (5a) afin d'être mobile en parallèle à une direction dans laquelle la surface latérale arrière (5c) s'étend.

2. Dispositif de levage (1) selon la revendication 1, dans lequel
la table (5) a une rainure (5f) ayant un intervalle s'agrandissant dans une direction d'épaisseur de plateau depuis une surface endroit de la surface de positionnement (5a), et chaque saillie (8) a une partie d'ajustement (5a) destinée à être ajustée sur la rainure (5f).

3. Dispositif de levage (1) selon la revendication 2, dans lequel
chaque partie d'ajustement (5a) est raccordée à la table (5) par l'intermédiaire d'un corps élastique qui tire dans une direction vers l'intérieur de la table (5) qui est une direction de mouvement de chaque saillie (8), et
les saillies (8) respectivement ont des parties d'épaulement (8c) en une forme épaulée, sur des surfaces latérales de celles-ci opposées l'une à l'autre.

4. Dispositif de levage (1) selon la revendication 3, dans lequel
les saillies (8), respectivement, ont, sur les surfaces latérales de celles-ci opposées l'une à l'autre, des premières surfaces inclinées (8b) formées de telle sorte que les deux surfaces latérales opposées soient inclinées vers des côtés extérieurs de la surface de positionnement (5a), depuis le côté surface latérale arrière (5c) jusqu'au côté surface latérale avant (5b).

5. Dispositif de levage (1) selon la revendication 4, dans lequel
les surfaces latérales des saillies (8) opposées l'une à l'autre, respectivement, ont, sur le côté surface latérale arrière (5c), des secondes surfaces inclinées (8g) formées de telle sorte que les deux surfaces latérales opposées soient inclinées depuis les surfaces supérieures des saillies (8) vers un côté intérieur de la surface de positionnement (5a).

6. Dispositif de levage (1) selon la revendication 5, dans lequel
un épaulement (8h) est prévu entre chaque seconde surface inclinée (8g) et la surface de positionnement (5a) afin de s'étendre verticalement depuis la surface de positionnement (5a).

7. Dispositif de levage (1) selon l'une quelconque des revendications 1 à 6, dans lequel
la table (5) est prévue afin d'être superposée sur un plateau inférieur de table (10) qui s'élève/s'abaisse conjointement avec la table (5), et la table (5) est mobile dans une direction horizontale par rapport à la base à roues (2).

8. Dispositif de levage (1) selon la revendication 7, dans lequel
le plateau inférieur de table (10) a deux trous allongés (10a) ajustés de façon mobile sur deux tiges (5k) prévues sur une surface envers (5j) de la table (5).

9. Dispositif de levage (1) selon la revendication 7, dans lequel
le plateau inférieur de table (10) a, sur une surface endroit (10b) de celui-ci, deux tiges ajustées de façon mobile sur deux trous allongés prévus dans la table (5).

10. Dispositif de levage (1) selon l'une quelconque des revendications 1 à 6, dans lequel
la table (5) est prévue afin d'être superposée sur une pluralité de plateaux qui s'élèvent/s'abaissent conjointement avec la table (5), et la table (5) est mobile dans une direction horizontale par rapport à la base à roues (2).

11. Dispositif de levage (1) selon la revendication 10, dans lequel
sur une surface superposée sur plateau de la table (5) et la pluralité de plateaux superposés les uns sur les autres dans une direction haut-bas, chaque plateau inférieur a deux trous allongés ajustés de façon mobile sur deux tiges prévues sur une surface envers de chaque plateau supérieur.

12. Dispositif de levage (1) selon la revendication 10, dans lequel
sur une surface superposée sur plateau de la table (5) et la pluralité de plateaux superposés les uns sur les autres dans une direction haut-bas, une surface endroit de chaque plateau inférieur a deux tiges ajustées de façon mobile sur deux trous allongés prévus dans chaque plateau supérieur.

13. Dispositif de levage (1) selon l'une quelconque des revendications 1 à 12, dans lequel
la table (5) a des poignées (5h) sur la surface latérale gauche (5d) et la surface latérale droite (5e).

14. Dispositif de levage (1) selon l'une quelconque des revendications 1 à 13, dans lequel
la surface de positionnement (5a) est formée par une surface à faible frottement ou une structure à faible frottement.

15. Dispositif de levage (1) selon l'une quelconque des revendications 1 à 14, dans lequel
la partie de support (3) est pourvue d'une graduation (3a) et la table (5) est pourvue d'une marque (4a) permettant de fournir une indication par rapport à la graduation.
